# DEMANDE DE BREVET EUROPEEN

(11) **EP 3 011 882 A1**
(43) Date de publication de la demande: **27.04.2016**
(21) Numéro de dépôt: 15190891.0
(22) Date de dépôt: 21.10.2015
(51) Int. Cl.: A47K 11/02, C05F 3/04

(54) **INSTALLATION DE TOILETTES TRANSPORTABLE**

(30) Priorité: 23.10.2014 FR 1460184
(71) Demandeur: Sanisphère, 26110 Saint-Ferréol-Trente-Pas (FR)
(72) Inventeur: COLOMBOT, Pierre, 26110 SAINT-FERREOL TRENTE PAS (FR)
(74) Mandataire: Thibault, Jean-Marc

(57) **Abrégé**

L'invention concerne une installation de toilettes comportant au moins un lieu d'aisance **(2)** pourvu d'un équipement **(4)** présentant une ouverture d'évacuation gravitaire **(5)** pour les effluents liquides et les déchets solides, le lieu d'aisance jouxtant un local technique **(3)** dans lequel au moins les déchets solides sont récupérés.

Selon l'invention, le lieu d'aisance est un local **(2)** comportant des parois délimitant intérieurement une enceinte fermée **(10)** accessible depuis l'extérieur par une porte **(11),** ce local d'aisance **(2)** étant séparé du local technique **(3)** par une paroi de fond **(13)** dans laquelle est aménagé un passage **(17)** pour au moins les déchets solides et communiquant uniquement avec l'ouverture d'évacuation gravitaire **(5)** et comporte une unique entrée d'air réalisée par l'ouverture d'évacuation gravitaire **(5)** ainsi qu'une unique sortie d'air **(20)** aménagée en partie haute du local technique, au moins une partie du local technique **(3)** étant séparée de l'extérieur par une enveloppe souple étanche au moins à l'air **(21),** conçue pour échauffer l'air du local technique, par le rayonnement solaire reçu, cette enveloppe souple étanche **(21)** délimitant aussi au moins une partie du local d'aisance **(2).**

## Description

La présente invention concerne le domaine technique général des dispositifs d'assainissement, d'évacuation et de transformation des matières fécales et des urines.

L'objet de l'invention vise plus particulièrement la catégorie des toilettes dites sèches sans recours à un fluide annexe d'évacuation et permettant de s'affranchir d'un branchement sur un réseau général d'évacuation d'eau.

L'état de la technique a proposé de nombreuses variantes de réalisation d'installations de toilettes dites sèches. D'une manière générale, une telle installation de toilettes comporte un local d'aisance jouxtant un local technique. Le local d'aisance comporte un équipement tel un siège de toilettes ou une dalle de toilettes à la turque. Cet équipement comporte une ouverture d'évacuation gravitaire pour les effluents liquides et pour les déchets solides tels que les matières fécales et les papiers toilettes.

Les effluents liquides et les déchets solides sont évacués dans le local technique pour y subir des opérations de traitement telles que séparation, compostage ou lombricompostage. De nombreuses solutions sont connues pour traiter les effluents liquides et les déchets solides. Par exemple, le brevet FR 2 755 362 propose la mise en oeuvre d'un tapis roulant incliné au-dessus duquel débouche l'ouverture d'évacuation gravitaire. Ce tapis roulant incliné assure une séparation gravitaire entre les effluents liquides récupérés à la partie basse du tapis roulant et les déchets solides entraînés en translation par le tapis roulant jusqu'à un poste de traitement, en particulier pour compostage par lombrics ou autres.

La demande de brevet FR 2 958 523 décrit des toilettes comportant un lieu d'aisance comportant un équipement présentant une ouverture d'évacuation gravitaire débouchant dans un local technique équipé d'un dispositif pour séparer les déchets liquides des déchets solides. Ce local technique comporte une unique entrée d'air réalisée par l'ouverture d'évacuation gravitaire et une unique sortie aménagée pour assurer un flux d'air de convection pour évaporer les déchets liquides et sécher les déchets solides. Ce local technique est composé d'une cuve en matière plastique surmontée d'une cheminée également en matière plastique, conçue pour échauffer l'air du local technique.

L'un des inconvénients majeurs de telles installations sèches concerne la présence d'odeurs désagréables dans le local d'aisance, ce qui conduit à leur utilisation dans des conditions désagréables voire à un refus de les utiliser.

Un autre inconvénient de telles toilettes sèches concerne leur construction dans la mesure où leur implantation est parfois réalisée dans des sites isolés. Même si de telles toilettes sèches peuvent être construites en atelier dans certains cas, se pose alors le problème de leur transport.

Le document DE 297 19 130 décrit une cabine de toilettes jetable réalisée avec un film compostable. Cette cabine comporte un équipement présentant une ouverture d'évacuation gravitaire pour les effluents liquides et les déchets solides, récupérés par un matériau de compostage. Si une telle cabine peut être transportée facilement, cette solution ne concerne pas une installation de toilettes sèches.

La présente invention vise à remédier aux inconvénients de l'état de la technique en proposant une nouvelle installation de toilettes sèches conçue pour éviter la présence d'odeurs, en particulier dans le local d'aisance, tout en présentant une fabrication simple permettant une implantation rapide, peu onéreuse même sur des sites isolés.

Pour atteindre de tels objectifs, la présente invention concerne une installation de toilettes comportant au moins un lieu d'aisance pourvu d'un équipement présentant une ouverture d'évacuation gravitaire pour les effluents liquides et les déchets solides, le local d'aisance jouxtant un local technique dans lequel au moins les déchets solides sont récupérés.

Selon l'invention, le lieu d'aisance est un local comportant des parois délimitant intérieurement une enceinte fermée accessible depuis l'extérieur par une porte, ce local d'aisance étant séparé du local technique par une paroi de fond dans laquelle est aménagé un passage pour au moins les déchets solides et communiquant uniquement avec l'ouverture d'évacuation gravitaire, au moins une partie du local technique étant séparée de l'extérieur par une enveloppe souple étanche au moins à l'air, conçue pour échauffer l'air du local technique, par le rayonnement solaire reçu, cette enveloppe souple étanche délimitant aussi au moins une partie du local d'aisance.

L'installation selon l'invention comporte en outre en combinaison l'une et/ou l'autre des caractéristiques additionnelles suivantes :
- l'enveloppe souple étanche est un film en matière plastique, transparent ou translucide laissant passer le rayonnement solaire ou un film en matière plastique de couleur sombre absorbant l'énergie du rayonnement solaire ;
- l'enveloppe souple étanche délimite le local technique d'une part et délimite ou recouvre le local d'aisance, à l'exception des parois de façade ou d'extrémités équipées des portes d'accès d'autre part ;
- la section de passage de la sortie d'air est supérieure à la section de passage de l'entrée d'air ;
- la sortie d'air du local technique comporte une coupelle s'étendant en relation de la section de passage de la sortie d'air, à distance de la paroi délimitant ladite sortie, pour laisser passer l'air et récupérer les eaux de pluie entrant par la sortie d'air ;
- l'installation présente une forme générale de pyramide conférée par le montage de l'enveloppe souple étanche, sur des poteaux inclinés en direction de l'apex et définissant les arêtes de faces triangulaires s'élevant à partir d'une base polygonale ;
- l'installation présente une forme générale demi-cylindrique abritant le local d'aisance positionné dans le prolongement du local technique, le local d'aisance et le local technique étant fermés par des parois transversales d'extrémité en forme de demi-disque ;
- l'installation présente une forme générale demi-cylindrique conférée par le montage sur des arceaux, de l'enveloppe souple étanche, l'installation comportant une série de locaux d'aisance disposés côte à côte dans la direction de l'axe longitudinal du demi-cylindre, chaque local d'aisance jouxtant un local technique selon la direction perpendiculaire au dit axe longitudinaL ;
- les locaux techniques des locaux d'aisance forment un local technique unique muni d'une sortie d'air unique communiquant uniquement avec l'ensemble des entrées d'air des locaux d'aisances ;
- l'équipement présente une ouverture d'évacuation gravitaire est un siège de toilettes ou une dalle de toilettes à la turque ;
- le local technique comporte un accumulateur de l'énergie thermique apportée par le rayonnement solaire, l'accumulateur présentant une inertie thermique permettant de relarguer dans le temps l'énergie après disparition du rayonnement solaire ;
- la sortie d'air du local technique est équipée d'une moustiquaire ;
- l'installation comporte pour chaque local technique, un tapis roulant monté de manière inclinée en délimitant entre une partie basse et une partie haute, une surface de réception des effluents liquides et des déchets solides tombant de l'ouverture de l'évacuation gravitaire, pour assurer une séparation gravitaire des effluents liquides et des déchets solides, un système de déplacement assurant l'avancée du tapis roulant et par suite des déchets solides vers la partie haute du tapis roulant.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'un premier exemple de réalisation d'une installation de toilettes conforme à l'invention.
La **Figure 2** est une vue en coupe élévation de l'installation de toilettes illustrée à la **Fig. 1**.
La **Figure 3** est une vue en perspective d'un deuxième exemple de réalisation d'une installation de toilettes conforme à l'invention.
La **Figure 4** est une vue en coupe longitudinale de l'installation illustrée à la **Fig. 3**.
La **Figure 5** est une vue en perspective d'un autre exemple de réalisation d'une installation de toilettes comportant plusieurs toilettes.
La **Figure 6** est une vue en perspective de ¾ avant de l'installation illustrée à la **Fig. 5** avec enlèvement de l'enveloppe de protection.
La **Figure 7** est une vue en perspective de ¾ arrière de l'installation illustrée à la **Fig. 5**, avec enlèvement de l'enveloppe de protection.

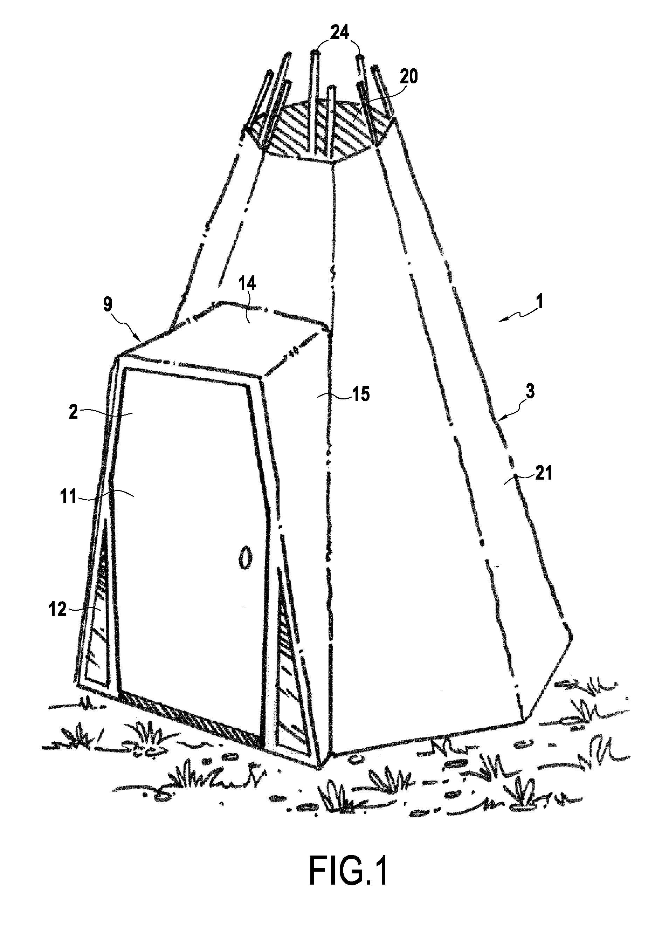

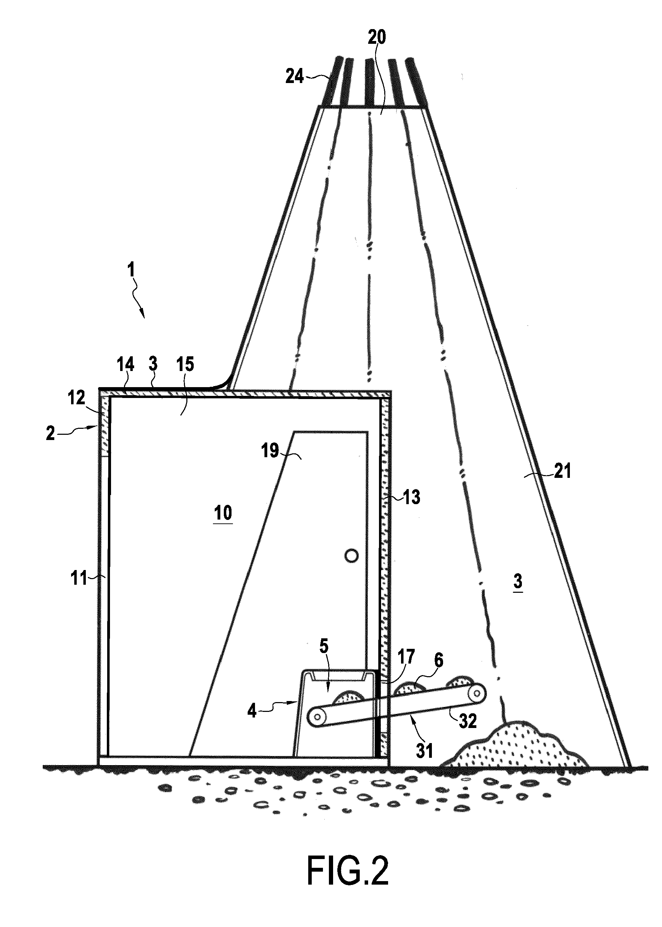

Tel que cela ressort des **Figures**, l'objet de l'invention concerne une installation de toilettes **1** dites sèches comprenant au moins un et dans l'exemple illustré aux **Fig. 1** et **2**, un seul local d'aisance **2** jouxtant ou placé à proximité d'un local technique **3**. Le local d'aisance **2** est pourvu classiquement d'un équipement **4** présentant une ouverture **5** d'évacuation gravitaire pour d'une part, des effluents liquides tels que des urines et, d'autre part, des déchets solides **6** composés de matières fécales et de papiers toilettes notamment. Classiquement, le local technique **3** récupère au moins les déchets solides mais généralement aussi les effluents liquides.

Selon l'exemple illustré aux **Fig. 1** et **2**, l'équipement **4** est un siège de toilettes mais il est clair que l'équipement **4** peut être réalisé par une dalle d'une toilette à la turque.

Le local d'aisance **2** comporte des parois **9** délimitant intérieurement une enceinte fermée **10** accessible depuis l'extérieur par une porte **11** pour constituer un lieu d'aisance fermé. Bien entendu, le local d'aisance **2** peut prendre différentes formes et dimensions en fonction des applications visées. Dans l'exemple illustré aux **Fig. 1** et **2**, le local d'aisance **2** comporte une paroi de façade **12** dans laquelle est aménagée une baie pour la porte **11**, une paroi de fond **13** reliée à la paroi de façade **12** par un toit **14** et deux parois latérales **15**.

Le local d'aisance **2** communique avec le local technique **3** de manière que le local technique comporte une unique entrée d'air réalisée par l'ouverture d'évacuation gravitaire **5** de l'équipement du local d'aisance **2**. En d'autres termes, la seule entrée d'air dans le local technique **3** est effectuée au travers du siège des toilettes ou de l'ouverture dans la dalle dans le cas de toilettes à la turque.

Dans l'exemple de réalisation illustré, l'ouverture d'évacuation gravitaire **5** communique avec le local technique **3** par l'intermédiaire d'un passage **17** aménagé dans la paroi de fond **13** qui constitue la paroi de séparation entre le local technique **3** et le local d'aisance **2**. Il doit être compris que l'équipement **4** est monté de manière étanche et de toute manière appropriée afin que le local technique **3** comporte comme entrée d'air uniquement l'ouverture d'évacuation gravitaire **5** de l'équipement **4**.

Bien entendu le local technique **3** comporte une porte d'accès pour permettre d'accéder à l'intérieur du local technique pour toutes les interventions relatives à la maintenance de l'installation. Dans l'exemple illustré aux **Fig. 1** et **2**, une paroi latérale **15** du local d'aisance comporte une porte **19** donnant accès à l'intérieur du local technique **3**.

Selon une autre caractéristique de l'installation **1** selon l'invention, le local technique **3** comporte une unique sortie d'air **20** aménagée en partie haute du local technique **3**. La sortie d'air **20** est aménagée à une altitude déterminée de manière à obtenir par rapport au niveau de l'entrée d'air **17** du local technique, une différence de hauteur importante voire la plus grande possible afin d'obtenir une circulation ascendante de l'air entre l'entrée **17** et la sortie d'air **20**. Classiquement, l'entrée d'air **17** est aménagée dans la partie basse du local technique **3** tandis que la sortie d'air **20** est aménagée au niveau du toit du local technique **3**.

Selon une caractéristique avantageuse de réalisation, la section de passage de la sortie d'air **20** est supérieure à la section de passage de l'entrée d'air **17.**

Il doit être compris que le local technique **3** est étanche au moins à l'air et comporte une unique entrée d'air réalisée par l'ouverture d'évacuation gravitaire **5** ainsi qu'une unique sortie d'air **20**. Bien entendu, l'étanchéité à l'air du local technique **3** est relative mais adaptée pour obtenir la circulation d'air entre l'entrée et la sortie. Avantageusement, le local technique **3** est étanche au fluide pour être étanche en particulier à l'eau.

Conformément à l'invention, au moins une partie du local technique **3** est séparée de l'extérieur par une enveloppe **21** souple étanche au moins à l'air, conçue pour réchauffer l'air du local technique, par le rayonnement solaire reçu. En d'autres termes, une partie ou la totalité des parois délimitant le local technique **3** sont réalisées par une enveloppe **21** souple étanche à l'air. L'échauffement de l'air situé à l'intérieur du local technique **3** permet ainsi la ventilation de l'installation par l'aspiration de l'air au travers de l'orifice d'évacuation gravitaire **5** et son évacuation par la sortie **20**. Une telle circulation de l'air permet la désodorisation du local d'aisance **2**.

Il doit être compris qu'une telle ventilation est possible si l'enveloppe souple **21** est étanche au moins à l'air ambiant. En d'autres termes, l'enveloppe souple **21** est étanche à l'air dans le sens où l'enveloppe souple empêche d'une part, l'air de l'extérieur de pénétrer à l'intérieur du local et d'autre part, l'air de l'intérieur du local technique de sortir à travers ladite enveloppe. D'une manière avantageuse, l'enveloppe souple **21** est étanche également au liquide afin d'éviter l'entrée de l'eau à l'intérieur du local technique. Bien entendu, cette étanchéité de l'enveloppe souple **21** est toute relative et adaptée pour obtenir la ventilation du local d'aisance **2** comme décrit ci-avant.

D'une manière générale, l'enveloppe souple **21** est ainsi étanche au fluide. Bien entendu, dans le cas où le local technique **3** est séparé de l'environnement extérieur par des parois qui ne sont pas l'enveloppe souple étanche **21**, ces autres parois présentent également un caractère étanche au moins à l'air.

Pour permettre une telle circulation d'air entre le local d'aisance **2** et le local technique **3**, il est clair que le local d'aisance **2** doit comporter un ou plusieurs passages d'air entre l'intérieur et l'extérieur du local d'aisance. L'entrée de l'air à l'intérieur du local d'aisance **2** peut être réalisée de toute manière appropriée. Par exemple, cette entrée d'air à l'intérieur du local d'aisance peut être réalisée par le jeu laissé en dessous de la porte d'entrée **11** ou par un passage aménagé dans une des parois du local d'aisance **2** et pourvu classiquement d'une grille de ventilation.

Selon une première variante de réalisation, l'enveloppe souple étanche **21** est un film en matière plastique transparent ou translucide laissant passer le rayonnement solaire. Par exemple, un tel film est réalisé en polychlorure de vinyle ou en polyéthylène.

Selon une autre variante de réalisation, l'enveloppe souple étanche **21** peut être réalisée par un film en matière plastique de couleur sombre absorbant l'énergie du rayonnement solaire. Par exemple, un tel film en matière plastique peut être réalisé en polychlorure de vinyle ou en polyéthylène.

Il est à noter qu'au moins une partie du local d'aisance **2** est aussi délimitée par une enveloppe souple étanche **21**. En d'autres termes, l'une et ou l'autre des parois du local d'aisance **2** peut être réalisée par une telle enveloppe souple étanche **21** ou être recouverte par une telle enveloppe souple étanche **21**. Avantageusement, cette enveloppe souple étanche **21** délimite à la fois le local technique **3** mais également le local d'aisance **2** comme cela est décrit en détail dans la suite de la description. Une telle variante de réalisation est particulièrement avantageuse lors de l'installation des toilettes dans des climats froids.

Selon une variante avantageuse de réalisation, le local technique **3** comporte un accumulateur de l'énergie thermique apporté par le rayonnement solaire. L'accumulateur présente ainsi une inertie thermique permettant de relarguer dans le temps l'énergie après disparition du rayonnement solaire. Par exemple, un tel accumulateur thermique peut être réalisé par une masse d'eau, de béton, de briques réfractaires ou par un matériau à changement d'état (liquide/solide) à température ambiante, voisine de 20°C.

Bien entendu, le local technique **3** est placé à proximité du local d'aisance **2** de toute manière appropriée. Dans l'exemple illustré aux **Fig. 1** et **2**, le local d'aisance **2** est inséré à l'intérieur du local technique **3**. Selon cet exemple, l'installation de toilettes **1** présente une forme générale de pyramide. Selon cette variante de réalisation, l'installation prend la forme d'un tipi. Ainsi le local technique **3** comporte en tant que paroi de séparation avec l'environnement extérieur, l'enveloppe souple étanche **21**, montée sur des poteaux **24** inclinés en direction d'un apex et définissant les arêtes des faces triangulaires du local technique s'élevant à partir d'une base polygonale. La sortie d'air **20** est directement réalisée entre les sommets des faces triangulaires qui ne se touchent pas au sommet.

Dans l'exemple illustré, le local d'aisance **2** est incrusté ou implanté en partie dans le local technique **3**. Bien entendu, il peut être envisagé que le local d'aisance **2** se trouve complètement intégré à l'intérieur du local technique **3**. Les parois du local d'aisance **2** peuvent être réalisées en partie ou complètement par une enveloppe souple étanche **21** à l'exception de la paroi de façade **12** pourvue de la porte d'accès **11**. Comme cela ressort des **Fig, 1** et **2**, l'enveloppe souple étanche **21** sert de paroi de séparation avec l'environnement extérieur pour le local technique **3** et de paroi de protection pour le local d'aisance **2** en le recouvrant, à l'exception de la paroi verticale de façade **12.** L'enveloppe souple étanche **21** recouvre le local technique **3** et le local d'aisance **2** en servant de toiture et de parois allant jusqu'au sol à l'exception de la paroi de façade **12** équipée de la porte.

Les **Fig, 3** et **4** illustrent une autre variante de réalisation de l'invention dans laquelle le local d'aisance **2** est positionné en appui ou dans le prolongement du local technique **3**. Dans l'exemple illustré, l'installation **1** présente une forme générale demi-cylindrique abritant le local d'aisance **2** positionné dans le prolongement du local technique **3** de sorte que le local technique **3** et le local d'aisance **2** sont séparés par une cloison de séparation **13** dans laquelle est aménagée l'entrée d'air **17** communiquant uniquement avec l'ouverture d'évacuation gravitaire **5**. La forme demi-cylindrique du local technique **3** est conférée par le montage de l'enveloppe souple étanche **21** sur des arceaux **26** en forme de demi-cercle. De préférence, le local d'aisance **2** présente également une forme demi-cylindrique de sorte que vu de l'extérieur, l'installation **1** présente une forme d'un demi-cylindre posé sur le sol. Selon cette variante, les parois du local technique **3** sont réalisées par une enveloppe souple étanche **21** tandis que le local d'aisance **2** est réalisé aussi par une telle enveloppe.

Selon cette variante de réalisation, le local d'aisance **2** et le local technique **3** sont fermés par des parois transversales d'extrémité **12** en forme de demi-disque. De préférence, la porte d'accès **11** au local d'aisance **2** est réalisée dans la paroi transversale d'extrémité **12** fermant le demi-cylindre tandis que la porte **19** d'accès au local technique est aménagée dans l'autre paroi transversale d'extrémité **12** fermant le demi-cylindre. L'enveloppe souple étanche **21** recouvre le local technique **3** et le local d'aisance **2** en servant de toiture et de parois allant jusqu'au sol à l'exception des parois transversales d'extrémités **12**.

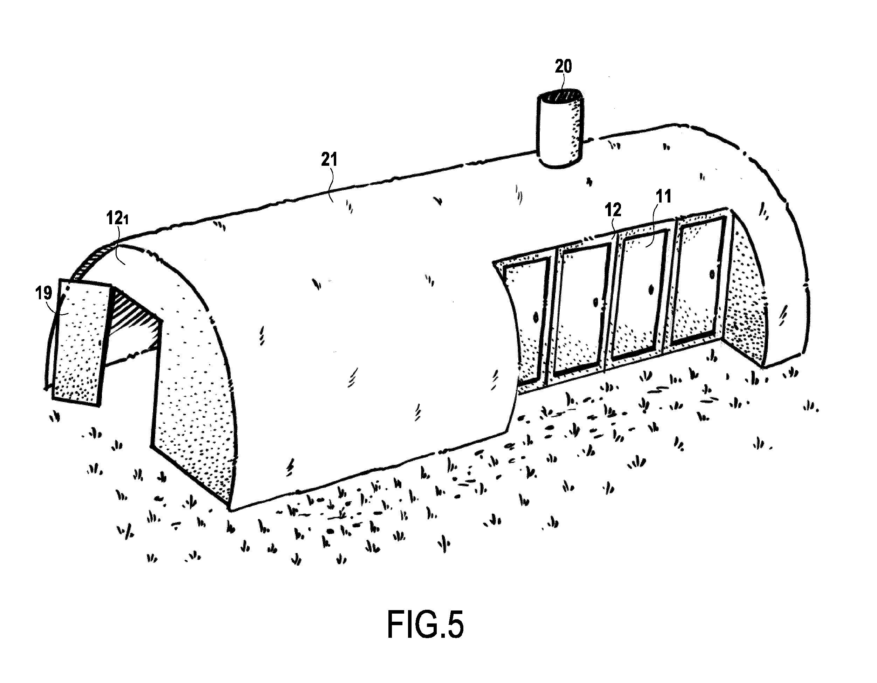

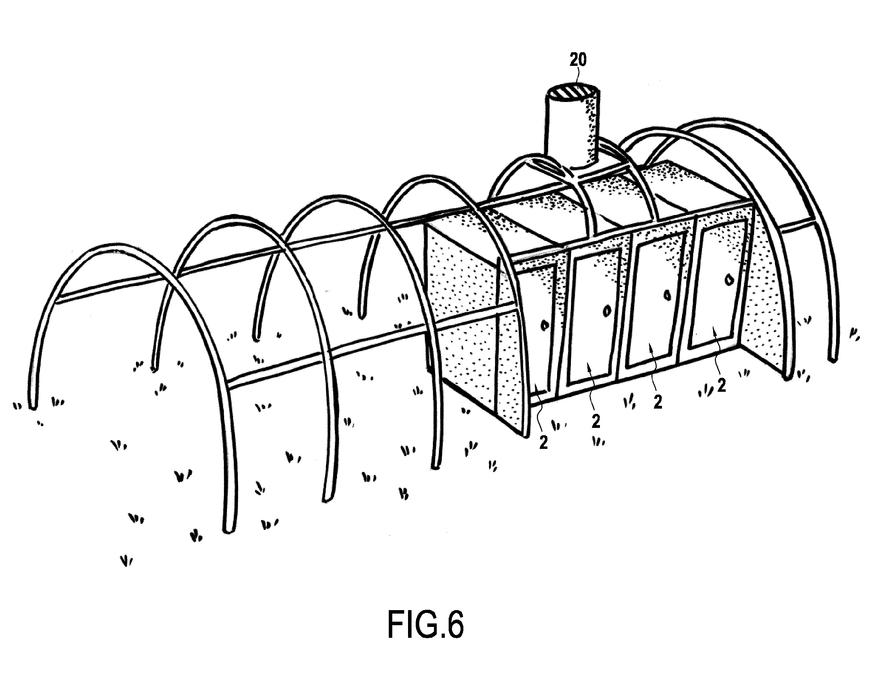

Les **Fig. 5** à **7** illustrent une autre variante de réalisation de l'installation **1** présentant également une forme générale demi-cylindrique. Selon cet exemple, l'installation **1** comporte une série de locaux d'aisance **2** disposés côte à côte. Selon cette variante de réalisation, les locaux d'aisance **2** sont disposés côte à côte selon l'axe longitudinal du demi-cylindre. Chaque local d'aisance **2** jouxte un local technique **3** selon la direction perpendiculaire à l'axe longitudinal du cylindre. Ainsi, les locaux techniques **3** s'étendent côte à côte aussi selon l'axe longitudinal du demi-cylindre.

Tel que cela ressort plus précisément des **Fig. 5** à **7**, chaque local d'aisance **2** est inséré à l'intérieur d'une enveloppe souple étanche **21** montée sur une structure comportant des arceaux **28** en forme de demi-cercle reliés entre eux par des traverses de liaison **29**. Les locaux d'aisance **2** sont réalisés en tout matériau appropriés et communiquent avec les locaux techniques **3** uniquement à travers les orifices d'évacuation gravitaire **5** comme expliqué ci-dessus. Chaque local d'aisance **2** comporte une porte d'accès **11**.

Dans l'exemple illustré, chaque local d'aisance **2** comporte une paroi de fond **13** qui constitue la paroi de séparation entre le local d'aisance **2** et le local technique **3**. Comme déjà expliqué, l'ouverture d'évacuation gravitaire **5** communique avec le local technique **3** uniquement avec le passage **17** aménagé dans la paroi de fond **13**. Ainsi, le local technique **3** comporte comme entrée d'air, uniquement l'ouverture d'évacuation gravitaire **5**. Bien entendu, il peut être prévu de réaliser un local technique **3** individuel pour chaque local d'aisance **2**.

Selon une variante de réalisation illustrée sur les dessins, il est à noter que les locaux techniques **3** des locaux d'aisance **2** forment un local technique unique muni d'une seule sortie d'air **20** communiquant uniquement avec l'ensemble des entrées d'air **17** des locaux d'aisance **2**. Selon cette variante de réalisation, le local technique **3** présente une forme générale de demi-cylindre, avec en façade de l'installation, une paroi verticale plane **12** pour le positionnement de chaque porte d'accès **11** du local d'aisance. Le local technique **3** se trouve fermé par deux parois transversales d'extrémité **12₁**. Une porte **19** donnant accès au local technique **3** est aménagée dans l'une ou les deux parois transversales d'extrémités **12₁**. Ce local technique **3** présente comme entrée d'air, les ouvertures d'évacuation gravitaires **5** des locaux d'aisance **2** et une sortie d'air unique **20** aménagée au sommet du demi-cylindre.

L'enveloppe souple étanche **21** recouvre le local technique **3** et les locaux d'aisance **2** en servant de toiture et de parois allant jusqu'au sol à l'exception des parois d'extrémités **12₁** du local technique **3** et des parois **12** des locaux d'aisance pourvues des portes d'accès **11**.

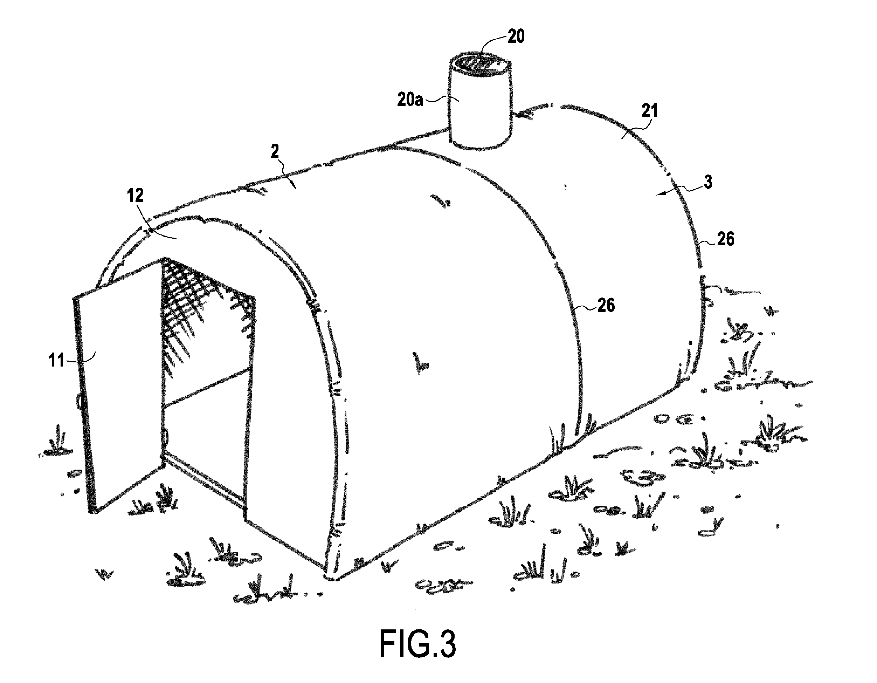

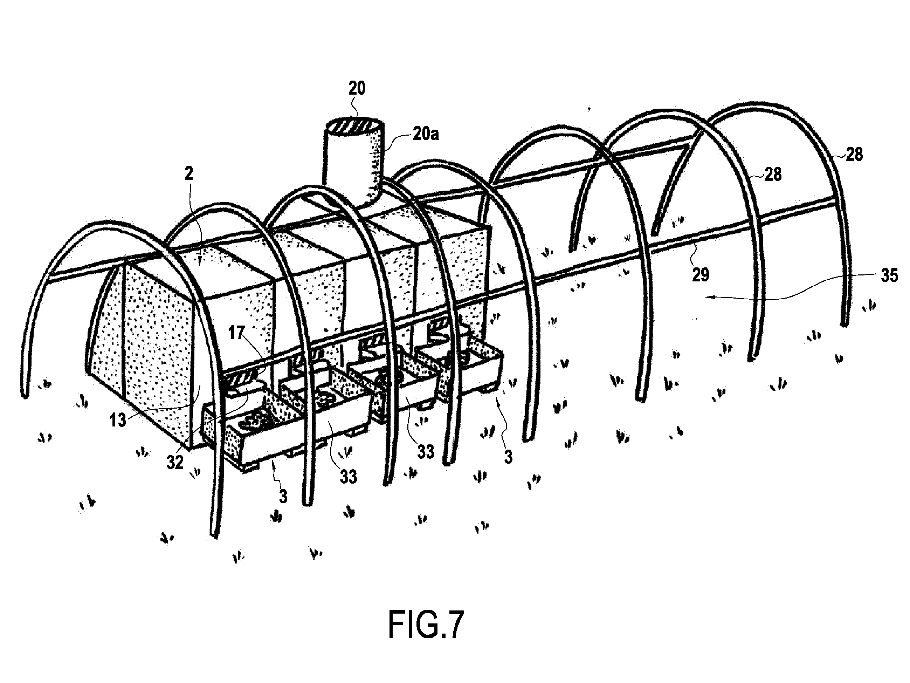

Cette sortie d'air **20** peut être réalisée de toute manière appropriée en étant aménagée directement par une ouverture aménagée dans l'enveloppe étanche **21** ou à travers une cheminée **20ₐ** rapportée sur l'enveloppe étanche (**Fig. 3** et **7**). Selon une variante avantageuse de réalisation, cette sortie d'air **20** est équipée d'une moustiquaire. Selon une autre variante de réalisation, la sortie d'air **20** du local technique **3** comporte une coupelle s'étendant sous la section de passage de la sortie d'air, et si possible au-delà, à distance de la paroi délimitant ladite sortie, de manière à laisser passer l'air tout en récupérant les eaux de pluie entrant par la sortie d'air.

Selon une variante préférée de réalisation, chaque ouverture d'évacuation gravitaire **5** du local d'aisance **2** est équipée d'un système **31** permettant d'assurer une séparation entre les effluents liquides et les déchets solides. Selon cet exemple de réalisation, pour chaque local technique **3**, est monté un tapis roulant **32** au-dessus duquel débouche l'ouverture d'évacuation gravitaire **5**. Le tapis roulant **32** est réalisé par une bande sans fin et se trouve monté de manière inclinée en délimitant entre une partie basse et une partie haute, une surface de réception des effluents liquides et des déchets solides, tombant à travers l'ouverture d'évacuation gravitaire **5**.

Dans les exemples illustrés, le tapis roulant **32** est monté pour traverser le passage aménagé dans la paroi de fond **13** afin de pouvoir être situé à l'aplomb de l'ouverture d'évacuation gravitaire **5**.

Le tapis roulant **32** assure une séparation gravitaire des effluents liquides récupérés à la partie basse du tapis roulant par tout moyen approprié non représenté. Le tapis roulant **32** est entraîné par un système de déplacement non représenté assurant l'avancée du tapis roulant et par suite des déchets solides **6** vers la partie haute du tapis roulant. Les déchets solides tombent ainsi à l'intérieur de bacs de compostage **33** pourvus ou non de lombrics.

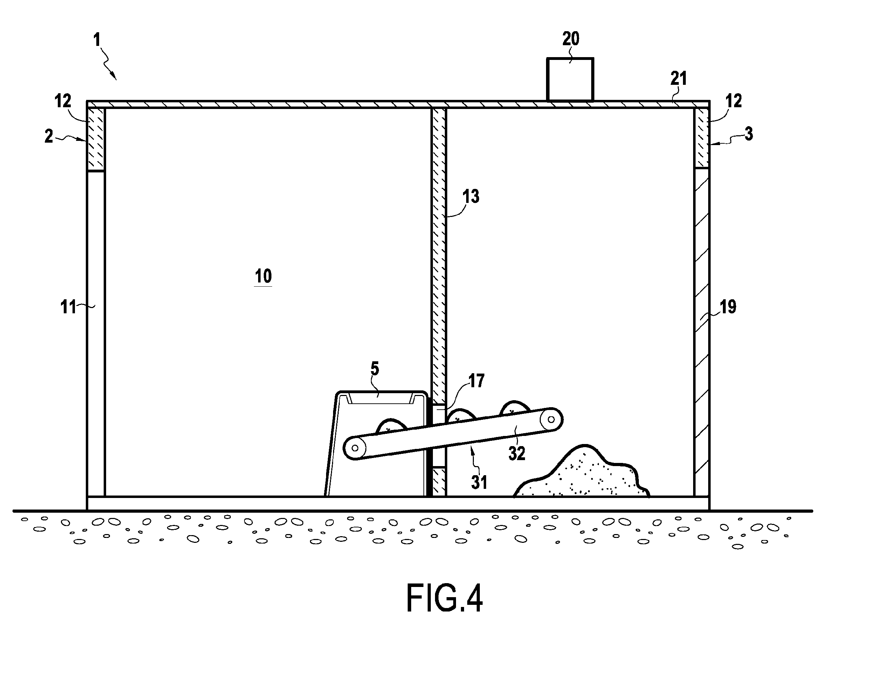

Bien entendu, un tel système de séparation **31** peut équiper l'une et/ou l'autre des variantes de réalisation de l'installation conformes à l'invention, décrites en relation avec les **Fig. 1** à **7**. Lorsque le système de séparation **31** équipe chaque ouverture d'évacuation gravitaire **5** d'une série de locaux d'aisance **2** selon la variante de réalisation illustrée aux **Fig. 5** à **7**, il peut être avantageux d'aménager à l'intérieur du local technique **3**, une aire **35** de stockage pour les bacs de compostage **33**. Par exemple, cette aire de stockage **35** peut être réalisée entre les locaux d'aisance et l'une et/ou l'autre des parois transversales d'extrémité **12₁**. Ainsi, les bacs **33** peuvent être stockés dans cette aire pendant une durée de une à quelques années afin de permettre le compostage ou lambricompostage, l'hygiénisation des matières fécales (la destruction des germes pathogènes) et leur transformation en humus stable (humidification).

L'invention n'est pas limitée aux exemples décrits et représentés car diverses modifications peuvent y être apportées sans sortir de son cadre.

## Revendications

1. Installation de toilettes comportant au moins un lieu d'aisance (**2**) pourvu d'un équipement (**4**) présentant une ouverture d'évacuation gravitaire (**5**) pour les effluents liquides et les déchets solides, le lieu d'aisance jouxtant un local technique (**3**) dans lequel au moins les déchets solides sont récupérés, et comporte une unique entrée d'air (**17**) réalisée par l'ouverture d'évacuation gravitaire (**5**) ainsi qu'une unique sortie d'air (**20**) aménagée en partie haute du local technique, **caractérisée en ce que** le lieu d'aisance est un local (**2**) comportant des parois (**9**) délimitant intérieurement une enceinte fermée (**10**) accessible depuis l'extérieur par une porte (**11**), ce local d'aisance (**2**) étant séparé du local technique (**3**) par une paroi de fond (**13**) dans laquelle est aménagé un passage (**17**) pour au moins les déchets solides et communiquant uniquement avec l'ouverture d'évacuation gravitaire (**5**) au moins une partie du local technique (**3**) étant séparée de l'extérieur par une enveloppe souple étanche au moins à l'air (**21**), conçue pour échauffer l'air du local technique, par le rayonnement solaire reçu, cette enveloppe souple étanche (**21**) recouvrant aussi au moins une partie du local d'aisance (**2**).

2. Installation de toilettes selon la revendication 1, **caractérisée en ce que** l'enveloppe souple étanche (**21**) est un film en matière plastique, transparent ou translucide laissant passer le rayonnement solaire ou un film en matière plastique de couleur sombre absorbant l'énergie du rayonnement solaire.

3. Installation de toilettes selon les revendications 1 ou 2, **caractérisée en ce que** l'enveloppe souple étanche (**21**) délimite le local technique (**3**) et délimite ou recouvre le local d'aisance (**5**), à l'exception des parois de façade ou d'extrémités (**12**, **12₁**) équipées des portes d'accès.

4. Installation de toilettes selon l'une des revendications 1 à 3, **caractérisée en ce que** la section de passage de la sortie d'air (**20**) est supérieure à la section de passage de l'entrée d'air (**17**).

5. Installation de toilettes selon l'une des revendications 1 à 4, **caractérisée en ce que** la sortie d'air (**20**) du local technique (**3**) comporte une coupelle s'étendant en relation de la section de passage de la sortie d'air, à distance de la paroi délimitant ladite sortie, pour laisser passer l'air et récupérer les eaux de pluie entrant par la sortie d'air.

6. Installation de toilettes selon l'une des revendications 1 à 5, **caractérisée en ce qu'**elle présente une forme générale de pyramide conférée par le montage de l'enveloppe souple étanche (**21**), sur des poteaux inclinés (**24**) en direction de l'apex et définissant les arêtes de faces triangulaires s'élevant à partir d'une base polygonale.

7. Installation de toilettes selon l'une des revendications 1 à 6, **caractérisée en ce qu'**elle présente une forme générale demi-cylindrique abritant le local d'aisance (**2**) positionné dans le prolongement du local technique (**3**), le local d'aisance (**2**) et le local technique (**3**) étant fermés par des parois transversales d'extrémité (**12**) en forme de demi-disque.

8. Installation de toilettes selon l'une des revendications 1 à 5, **caractérisée en ce qu'**elle présente une forme générale demi-cylindrique conférée par le montage sur des arceaux (**26**), de l'enveloppe souple étanche (**21**), l'installation comportant une série de locaux d'aisance disposés côte à côte dans la direction de l'axe longitudinal du demi-cylindre, chaque local d'aisance jouxtant un local technique selon la direction perpendiculaire au dit axe longitudinal.

9. Installation de toilettes selon la revendication 8, **caractérisée en ce que** les locaux techniques (**3**) des locaux d'aisance (**2**) forment un local technique unique muni d'une sortie d'air unique (**20**) communiquant uniquement avec l'ensemble des entrées d'air (**17**) des locaux d'aisances.

10. Installation de toilettes selon l'une des revendications 1 à 9, **caractérisée en ce que** l'équipement (**4**) présentant une ouverture d'évacuation gravitaire (**5**) est un siège de toilettes ou une dalle de toilettes à la turque.

11. Installation de toilettes selon l'une des revendications 1 à 10, **caractérisée en ce que** le local technique (**3**) comporte un accumulateur de l'énergie thermique apportée par le rayonnement solaire, l'accumulateur présentant une inertie thermique permettant de relarguer dans le temps l'énergie après disparition du rayonnement solaire.

12. Installation de toilettes selon l'une des revendications 1 à 11, **caractérisée en ce que** la sortie d'air (**20**) du local technique est équipée d'une moustiquaire.

13. Installation de toilettes selon l'une des revendications 1 à 12, **caractérisée en ce qu'**elle comporte pour chaque local technique, un tapis roulant (**32**) monté de manière inclinée en délimitant entre une partie basse et une partie haute, une surface de réception des effluents liquides et des déchets solides tombant de l'ouverture de l'évacuation gravitaire (**5**), pour assurer une séparation gravitaire des effluents liquides et des déchets solides, un système de déplacement assurant l'avancée du tapis roulant (**32**) et par suite des déchets solides vers la partie haute du tapis roulant.
